# EUROPÄISCHE PATENTSCHRIFT

(11) **EP 3 546 047 B1**
(45) Veröffentlichungstag und Bekanntmachung des Hinweises auf die Patenterteilung: **16.06.2021**
(21) Anmeldenummer: 19158582.7
(22) Anmeldetag: 21.02.2019
(51) Int. Cl.: B01D 46/00, B01D 46/10, B01D 46/12, B01D 46/52

(54) **BELÜFTUNGSEINRICHTUNG ZUM FILTERN VON LUFT UND ZUM ABSCHEIDEN VON WASSERAEROSOLEN AUS LUFT**
VENTILATION DEVICE FOR FILTERING AIR AND FOR SEPARATING WATER AEROSOLS FROM AIR
DISPOSITIF D'AÉRATION PERMETTANT DE FILTRER L'AIR ET DE SÉPARER DES AÉROSOLS D'EAU DE L'AIR

(30) Priorität: 27.03.2018 DE 102018204630
(43) Veröffentlichungstag der Anmeldung: 02.10.2019
(73) Patentinhaber: Filtration Group GmbH, 74613 Öhringen (DE)
(72) Erfinder: GORZAWSKI, Steffen, 74906 Bad Rappenau (DE); KUGEL, Wolfgang, 74549 Wolpertshausen (DE); SZONTKOWSKI, Andreas, 74182 Obersulm (DE); RÖDIGER, Fritz, 74257 Untereisesheim (DE)
(74) Vertreter: BRP Renaud & Partner mbB Rechtsanwälte Patentanwälte Steuerberater

(56) Entgegenhaltungen:
- DE-A1-102016 009 698
- DE-U1- 20 023 285
- US-A- 5 433 763
- US-A1- 2011 154 991

## Beschreibung

Die Erfindung betrifft eine Belüftungseinrichtung zum Filtern von Luft und zum Abscheiden von Wasseraerosolen aus Luft gemäß dem Oberbegriff des Anspruchs 1.

Belüftungseinrichtungen zum Filtern von Luft und zum Abscheiden von Wasseraerosolen aus Luft sind aus dem Stand der Technik bereits bekannt und werden beispielsweise in Windkraftanlagen eingesetzt. Je nach dem Standort der Windkraftanlage muss die von außen angesaugte Luft gereinigt und entwässert werden, um elektronische oder elektrische Bauteile innerhalb der Windkraftanlage zu schützen. Dazu saugen Gebläse die Luft in die Windkraftanlage durch Filterelemente an, in denen die angesaugte Luft gereinigt und entwässert wird. Üblicherweise wird die Luft von außen zu dem jeweiligen Filterelement über Luftleitungsrohre geführt und an das jeweilige Filterelement durch einen Strömungsadapter - üblicherweise eine Aufweitung des Luftrohrs - angeschlossen. Nachteiligerweise ist dabei die Luftströmung in dem jeweiligen Filterelement ungleichmäßig verteilt, was zu einem ungleichmäßigen und schnellen Abnutzen des Filterelements führt. Beispielhaft sind solche Belüftungseinrichtungen in US 2011/154991 A1, US 5 433 763 A, DE 200 23 285 U1 und DE 10 2016 009698 A1 beschrieben.

Die Aufgabe der Erfindung ist es daher, für eine Belüftungseinrichtung der gattungsgemäßen Art eine verbesserte oder zumindest alternative Ausführungsform anzugeben, bei der die beschriebenen Nachteile überwunden werden.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, die Luftströmung durch eine Belüftungseinrichtung zum Filtern von Luft und zum Abscheiden von Wasseraerosolen aus Luft gleichmäßiger zu verteilen. Die gattungsgemäße Belüftungseinrichtung weist dabei wenigstens ein Filterelement, wenigstens ein Gehäuse, wenigstens ein Gebläse und wenigstens einen Strömungsadapter auf. Das wenigstens eine Filterelement ist dabei in dem wenigstens einen Gehäuse von einer Einlassöffnung zu einer Auslassöffnung des wenigstens einen Gehäuses in eine Strömungsrichtung luftdurchströmbar festgelegt. Das wenigstens eine Gebläse ist an der Auslassöffnung in Strömungsrichtung hinter dem wenigstens einen Gehäuse und der Strömungsadapter ist an der Einlassöffnung in Strömungsrichtung vor dem wenigstens einen Gehäuse festgelegt. Erfindungsgemäß ist der wenigstens eine Strömungsadapter einteilig und bevorzugt aus Kunststoff. Der wenigstens eine Strömungsadapter ist dabei derart geformt, dass die durch das wenigstens eine Gebläse von außen angesaugte Luft bereits in dem wenigstens einen Strömungsadapter verteilt werden und über das gesamte Filterelement gleichmäßig strömen kann. Insbesondere kann dadurch das jeweilige Filterelement geschont und länger verwendet werden. Ferner vergrößert der Strömungsadapter aus Kunststoff das Eigengewicht der Belüftungsanlage vorteilhafterweise nur geringfügig. Der Strömungsadapter kann dabei robust ausgeformt sein.

In der Belüftungseinrichtung sind der wenigstens eine Strömungsadapter, das wenigstens eine Gehäuse mit dem wenigstens einen Filterelement und das wenigstens eine Gebläse in Strömungsrichtung nacheinander angeschlossen, so dass die Luft durch den wenigstens eine Strömungsadapter zu der Einlassöffnung des wenigstens einen Gehäuses und weiter durch das wenigstens eine Filterelement strömen kann. Durch das Gebläse ist dabei die Luft von außen ansaugbar und durch den wenigstens einen Strömungsadapter weiter in das Gehäuse mit dem Filterelement leitbar. Das Gehäuse kann vorteilhafterweise aus Kunststoff hergestellt - beispielweise rotationsgeformt - sein. Der Strömungsadapter kann vorteilhafterweise strömungsoptimiert sein und die Geometrie des Strömungsadapters kann an den jeweiligen Anwendungsfall angepasst sein. Das Filterelement weist zweckgemäß eine Rein- und eine Rohseite auf und ist aus einem Filtermaterial geformt. Das Filtermaterial kann dabei beispielsweise hydrophob sein und das in der angesaugten Luft befindliche Wasser in einer Filtrierzone abscheiden. Das in dem Filterelement abgeschiedene Wasser kann sich dann auf der Rohseite des Filterelements unter der Einwirkung der Schwerkraft in eine Drainagezone des Filterelements absetzen. Die Drainagezone schließt an die Filtrierzone des Filterelements an und ist zweckgemäß quer zur Strömungsrichtung versetzt unterhalb der Filtrierzone des Filterelements angeordnet. Die Filtrierzone des Filterelements korrespondiert dabei mit einem Filtrierbereich und die Drainagezone mit einem Abtropfbereich des Gehäuses. Der Filtrierbereich und der Abtropfbereich des Gehäuses schließen dabei einander an.

Vorteilhafterweise kann vorgesehen sein, dass der wenigstens eine Strömungsadapter einen Sammelbereich und einen Strömungsbereich aufweist, die aneinander anschließen. Der Strömungsbereich des Strömungsadapters korrespondiert dabei luftleitend mit der Einlassöffnung des Gehäuses und der Sammelbereich ist quer zur Strömungsrichtung versetzt unterhalb des Strömungsbereichs angeordnet. Der Sammelbereich liegt vorzugsweise außerhalb einer Luftströmung des Strömungsadapters. In der Belüftungseinrichtung korrespondiert der Strömungsbereich des wenigstens einen Strömungsadapters mit dem Filtrierbereich des jeweiligen Gehäuses und der Filtrierzone des jeweiligen Filterelements in dem Gehäuse. Der Sammelbereich liegt dagegen quer zur Strömungsrichtung versetzt unterhalb des Strömungsbereichs des Strömungsadapters und in dem Sammelbereich liegt keine oder nur vernachlässigbar kleine Luftströmung vor.

Vorteilhafterweise kann vorgesehen sein, dass eine Ablaufkanalanordnung den Sammelbereich der wenigstens eine Strömungsadapter und einen Abtropfbereich des jeweiligen Gehäuses fluidisch miteinander verbindet. Durch die Ablaufkanalanordnung kann das in dem Filterelement abgeschiedene Wasser aus dem jeweiligen Gehäuse in den Sammelbereich des wenigstens einen Strömungsadapters entgegen der Strömungsrichtung geführt werden. Der Sammelbereich des Strömungsadapters liegt dabei außerhalb der Luftströmung, so dass dem in dem Filterelement abgeschiedenen Wasser beim Strömen in den Sammelbereich des Strömungsadapters kein Strömungswiderstand entgegenwirkt. Zum Ableiten des in dem Filterelement abgeschiedenen Wassers aus dem Sammelbereich kann der wenigstens eine Strömungsadapter eine aus dem Sammelbereich nach außen führende Adapterauslassöffnung aufweisen, die fluidleitend mit der Ablaufkanalanordnung verbunden ist. Das in dem Filterelement abgeschiedene Wasser kann folglich ohne einen oder mit einem geringen Strömungswiderstand unter Einwirkung der Schwerkraft aus dem jeweiligen Gehäuse in den Sammelbereich des Strömungsadapters entgegen der Strömungsrichtung geführt werden. Innerhalb des Strömungsadapters kann dann das in dem Filterelement abgeschiedene Wasser ohne einen oder mit einem geringen Strömungswiderstand unter Einwirkung der Schwerkraft zu der Adapterauslassöffnung und weiter nach außen geleitet werden. Auf diese vorteilhafte Weise kann ein Abführen des in dem Filterelement abgeschiedenen Wassers in jedem Betriebspunkt der Belüftungseinrichtung ohne eine zusätzliche Krafteinwirkung sichergestellt werden. Insbesondere können dadurch zusätzliche Leitungen und Pumpen zum Abführen des in dem Filterelement abgeschiedenen Wassers entfallen.

Bei einer Weiterbildung der erfindungsgemäßen Belüftungseinrichtung ist vorteilhafterweise vorgesehen, dass die Ablaufkanalanordnung in einem Kopplungsrahmen ausgebildet ist, der zwischen dem wenigstens einen Gehäuse und dem wenigstens einen Strömungsadapter quer zur Strömungsrichtung luftdicht festgelegt ist. Der Kopplungsrahmen verbindet somit das wenigstens eine Gehäuse mit den wenigstens einen Strömungsadaptern in Strömungsrichtung luftleitend und quer zur Strömungsrichtung luftdicht. Dadurch kann insbesondere ein Druckraum der Belüftungseinrichtung abgedichtet und aufrechterhalten sein. Der Kopplungsrahmen kann ferner eine tragende Funktion übernehmen und die Belüftungseinrichtung gegen eine Verformung stabilisieren. Die Ablaufkanalanordnung ist in dem Kopplungsrahmen ausgebildet, so dass das in dem Filterelement abgeschiedene Wasser aus dem Abtropfbereich des jeweiligen Gehäuses über den Kopplungsrahmen in den Sammelbereich des wenigstens einen Strömungsadapters geleitet werden kann. Anschließend kann das in dem Filterelement abgeschiedene Wasser aus dem Sammelbereich des wenigstens einen Strömungsadapters nach außen durch die Adapterauslassöffnung geleitet werden. Die Ablaufkanalanordnung kann dabei die Abtropfbereiche der mehreren Gehäuse mit dem Sammelbereich des wenigstens einen Strömungsadapters oder jedoch die Abtropfbereiche der mehreren Gehäuse mit den Sammelbereichen der mehreren Strömungsadapter fluidisch verbinden.

Vorteilhafterweise kann die Ablaufkanalanordnung wenigstens einen horizontalen Rinnenkanal aufweisen, der mit einem Abtropfbereich wenigstens eines der Gehäuse fluidisch verbunden ist. Der Rinnenkanal ist in dem Betriebszustand horizontal mit einer Abweichung bis zu 10° zum Boden ausgerichtet, um das in dem Filterelement abgeschiedene Wasser horizontal in der Belüftungseinrichtung unter der Einwirkung der Schwerkraft leiten zu können. Dabei kann der einzelne Rinnenkanal die Abtropfbereiche der mehreren nebeneinander angeordneten Gehäusen mit den entsprechenden Filterelementen fluidisch verbinden. Vorteilhafterweise kann die Ablaufkanalanordnung wenigstens zwei übereinander angeordnete Rinnenkanäle aufweisen, die durch wenigstens einen vertikalen Ablaufkanal fluidisch miteinander verbunden sind. Die übereinander angeordneten Rinnenkanäle verbinden dabei die Abtropfbereiche der Gehäuse in jeweils einer horizontalen Reihe und der wenigstens eine vertikale Ablaufkanal verbindet die Rinnenkanäle vertikal fluidisch miteinander. Der vertikale Ablaufkanal ist in dem Betriebszustand vertikal mit einer Abweichung bis zu 10° zum Boden ausgerichtet, so dass das in dem Filterelement abgeschiedene Wasser unter der Einwirkung der Schwerkraft aus einem zu dem Boden oberen Rinnenkanal in den zu dem Boden unteren Rinnenkanal geleitet werden kann. Vorteilhafterweise kann in der Ablaufkanalanordnung auf diese Weise ein Abführen des in dem Filterelement abgeschiedenen Wassers in jedem Betriebspunkt der Belüftungseinrichtung ohne eine zusätzliche Krafteinwirkung ausschließlich unter der Einwirkung der Schwerkraft sichergestellt werden. Das in den Filterelementen abgeschiedene Wasser kann anschließend aus der Ablaufkanalanordnung in den Sammelbereich des Strömungsadapters und weiter nach außen geleitet werden. Zweckgemäß kann dazu der zum Boden unterste Rinnenkanal an seiner tiefsten Stelle durch eine Ablauföffnung mit dem Sammelbereich des wenigstens einen Strömungsadapters - beispielsweise über eine Ablaufleitung - fluidisch verbunden sein. Auf diese vorteilhafte Weise sind die mehreren Gehäuse und die mehreren Filterelemente über die Ablaufkanalanordnung in dem Kopplungsrahmen miteinander fluidisch verbunden und das in den mehreren Filterelementen abgeschiedene Wasser kann vereinfacht aus der Belüftungseinrichtung abgeleitet werden. Bevorzugt sind der wenigstens eine Rinnenkanal aus einem u-förmigen metallischen Profil und der wenigstens eine Ablaufkanal aus einem u-förmigen oder I-förmigen metallischen Profil gebildet.

Bei einer Weiterbildung der erfindungsgemäßen Belüftungseinrichtung ist vorteilhafterweise vorgesehen, dass das jeweilige Filterelement einen umlaufenden Dichtrand aufweist. Dabei liegt der Dichtrand einseitig an einer die Einlassöffnung einfassenden Dichtfläche des Gehäuses und andersseitig an dem Kopplungsrahmen an und dichtet das jeweilige Gehäuse um die Einlassöffnung zu dem Kopplungsrahmen quer zur Strömungsrichtung ab. Der Dichtrand dichtet den Druckraum der Belüftungseinrichtung ab und ist an dem Filterelement angeordnet, so dass beim Einsetzen oder beim Auswechseln des jeweiligen Filterelements in der Belüftungseinrichtung auch der Dichtrand eingesetzt oder ausgewechselt werden kann. Insbesondere kann das Abdichten des Druckraumes der Belüftungseinrichtung durch den Dichtrand werkzeugfrei vorgenommen werden und dadurch der Zeit- und Kraftaufwand beim ersten und beim erneuten Abdichten der Belüftungseinrichtung reduziert werden. Die Dichtfläche kann dabei durch einen die Einlassöffnung einfassenden Gehäuserahmen gebildet sein, der eine radial nach innen vorstehende Einlassstufe in dem jeweiligen Gehäuse bildet. Auf diese vorteilhafte Weise kann die Luftströmung ohne Verluste zu dem Filterelement in dem jeweiligen Gehäuse geleitet werden. Zum Abdichten kann dabei an einer dem Gehäuse und/oder dem Kopplungsrahmen zugewandten Seitenfläche des Dichtrands eine elastische Dichtung festgelegt sein. Die elastische Dichtung kann dabei an den Seitenflächen des Dichtungsrands stoffschlüssig - beispielsweise angeklebt - oder jedoch kraftschlüssig - beispielsweise in einer Profilnut eingerastet - festgelegt sein.

In der Belüftungseinrichtung ist vorgesehen, dass das Filterelement, das Gehäuse und das Gebläse jeweils ein Belüftungsmodul mit einer Strömungsfläche bilden. Dabei sind mehrere identische Belüftungsmodule zu der Belüftungseinrichtung aneinander derart lösbar gestapelt, dass eine Gesamtströmungsfläche der Belüftungseinrichtung einem Vielfachen der Strömungsfläche des einzelnen Belüftungsmoduls entspricht. Vorteilhafterweise ist dadurch die Belüftungseinrichtung modular aufbaubar und je nach den Anforderungen mit weiteren Belüftungsmodulen erweiterbar. Ferner sind die einzelnen identisch ausgestalteten Belüftungsmodule gegeneinander vereinfacht austauschbar, so dass die Montage und die Wartung der Belüftungseinrichtung vereinfacht sind.

Vorteilhafterweise kann vorgesehen sein, dass wenigstens zwei der in der Belüftungseinrichtung benachbarten Belüftungsmodule an seinen Gehäusen jeweils eine sich in Strömungsrichtung erstreckende Kabelteilvertiefung aufweisen. Dabei liegen die jeweiligen Kabelteilvertiefungen an den Gehäusen der benachbarten Belüftungsmodule in Strömungsrichtung aneinander an und bilden eine Kabelöffnung. Die Kabelteilvertiefungen können identisch ausgestaltet sein, so dass eine Querschnittsfläche der Kabelöffnung einer doppelten Querschnittsfläche der einzelnen Kabelteilvertiefung entspricht. Durch die Kabelöffnung können die Kabelleitungen in Strömungsrichtung zwischen den jeweiligen Belüftungsmodulen geführt werden, so dass ohne einen zusätzlichen Platzbedarf elektrische Bestandteile der Belüftungseinrichtung in Strömungsrichtung vor und nach dem jeweiligen Belüftungsmodul miteinander verbunden werden können.

Um die einzelnen Belüftungsmodule aneinander lösbar stapeln zu können, kann vorteilhafterweise eins der in der Belüftungseinrichtung benachbarten Belüftungsmodule an seinem Gehäuse wenigstens eine sich in Strömungsrichtung erstreckende Ausnehmung und ein anderes der in der Belüftungseinrichtung benachbarten Belüftungsmodule an seinem Gehäuse wenigstens eine sich in Strömungsrichtung erstreckende Ausformung aufweisen. Die wenigstens eine Ausnehmung und die wenigstens eine Ausformung stehen dabei quer zur Strömungsrichtung im Eingriff und bilden eine sogenannte Nut-Feder-Verbindung. Die wenigstens eine Ausnehmung und die wenigstens eine Ausformung legen auf diese Weise die benachbarten Belüftungsmodule aneinander lösbar fest. Um die jeweiligen Belüftungsmodule identisch auszubilden, können an dem jeweiligen Gehäuse jeweils die wenigstens eine Ausnehmung und die wenigstens eine Ausformung ausgebildet sein. Zweckgemäß sind diese an gegenüberliegenden Gehäuseseiten ausgebildet, so dass die übereinander oder nebeneinander gestapelten Belüftungsmodule lösbar einander festlegbar sind.

Bei einer bevorzugten Ausgestaltung der Belüftungseinrichtung ist vorgesehen, dass die Belüftungseinrichtung vier Belüftungsmodule und einen einzigen Strömungsadapter aufweist. Die Belüftungsmodule sind dabei zu einem 2x2 Stapelblock aneinander lösbar festgelegt und mittels eines Kopplungsrahmens an dem Strömungsadapter luftleitend festgelegt. Die jeweiligen Belüftungsmodule sind identisch ausgestaltet und weisen jeweils ein quaderförmiges Gehäuse mit einem quaderförmigen Filterelement und ein Gebläse auf. Der Strömungsadapter ist an dem jeweiligen Belüftungsmodul durch den Kopplungsrahmen festgelegt.

Vorteilhafterweise kann der Kopplungsrahmen einen die jeweiligen Belüftungsmodule quer zur Strömungsrichtung einfassenden Modultragrahmen und einen den wenigstens einen Strömungsadapter tragenden Adaptertragrahmen aufweisen. Der Modultragrahmen und der Adaptertragrahmen können durch eine Scharniervorrichtung aneinander klappbar oder verschiebbar gelagert und durch eine Verschlusseinheit aneinander festlegbar sein. Bei dieser vorteilhaften Ausgestaltung der Belüftungseinrichtung kann der Kopplungsrahmen geöffnet und beispielweise das Filterelement in dem jeweiligen Belüftungsmodul vereinfacht ausgewechselt werden. Die Ablaufkanalanordnung kann dann beispielsweise in dem Adaptertragrahmen ausgebildet sein. An dem Kopplungsrahmen kann vorteilhafterweise eine Durchlassanordnung für die Einlassöffnung des jeweiligen Gehäuses quer zur Strömungsrichtung festgelegt sein. Die Durchlassanordnung - bevorzugt eine Jalousienanordnung - ist dabei zum Steuern des Luftvolumenstroms durch das jeweilige Belüftungsmodul vorgesehen.

Bei einer vorteilhaften Weiterbildung der erfindungsgemäßen Belüftungseinrichtung ist vorgesehen, dass das jeweilige Gebläse durch eine Steuerungsvorrichtung gesteuert ist. Die Steuerungsvorrichtung weist wenigstens eine Messanordnung zum Erfassen des Luftvolumenstroms durch das jeweilige Filterelement auf. Die wenigstens eine Messanordnung weist dabei eine Druckmesseinheit zum Erfassen eines statischen Drucks auf, die innerhalb der Belüftungseinrichtung angeordnet ist. Durch die Druckmesseinheit kann der statische Druck in dem jeweiligen Filterelement erfasst und daraus der Luftvolumenstrom durch das jeweilige Filterelement bestimmt werden. Insbesondere entfällt eine direkte und ungenaue Messung des Luftvolumenstroms in dem jeweiligen Filtergehäuse und die Belüftungseinrichtung kann genauer angesteuert werden.

Vorteilhafterweise kann die jeweilige Druckmesseinheit mit einer Druckmessstelle fluidisch verbunden sein oder eine solche Druckmessstelle aufweisen. Die Druckmessstelle ist dabei innerhalb des Gehäuses im Bereich der Einlassöffnung angeordnet und weist dort eine Messöffnung auf. Die Messöffnung kann dabei das jeweilige Gehäuse durchdringen, so dass die außerhalb des Gehäuses angeordnete Druckmesseinheit den statischen Druck innerhalb des Gehäuses und des Filterelements erfassen kann. Die jeweilige Druckmessstelle oder deren Messöffnung können vorteilhafterweise in einem Abtropfbereich des Gehäuses angeordnet sein. Der Abtropfbereich des Gehäuses korrespondiert dabei mit einer Drainagezone des Filterelements, die zum Abführen des in dem Filterelement abgeschiedenen Wassers vorgesehen ist. Die Drainagezone des Filterelements ist dabei an eine Filtrierzone des Filterelements angeschlossen und ist quer zur Strömungsrichtung unterhalb der Filtrierzone des Filterelements angeordnet. Um die Druckmesseinheit oder deren Druckmessstelle vor Wasser und Schmutz zu schützen, kann die Druckmessstelle auf einer Reinseite des Filterelements in dem jeweiligen Gehäuse angeordnet sein. Vorteilhafterweise kann die jeweilige Druckmessstelle oder deren Messöffnung in einer strömungsberuhigten Zone des Abtropfbereichs des Gehäuses in dieses integriert beziehungsweise in diesem festgelegt sein. Dabei kann die strömungsberuhigte Zone des Abtropfbereichs des Gehäuses mit einer strömungsberuhigten Zone der Drainagezone des Filterelements korrespondieren. "Strömungsberuhigt" bedeutet in diesem Zusammenhang, dass die an der Druckmessstelle oder deren Messöffnung vorliegende Luftströmung für eine Messung des statischen Drucks vernachlässigbar gering ist beziehungsweise in der Messung des statischen Drucks einen Messfehler unter 5% verursacht.

Vorteilhafterweise kann das Gehäuse einen die Einlassöffnung einfassenden Gehäuserahmen mit einer radial nach innen vorstehenden Einlassstufe aufweisen. Um die Messgenauigkeit beim Erfassen des statischen Drucks in dem jeweiligen durchströmten Gehäuse zu erhöhen, kann die Druckmessstelle an der Einlassstufe angeordnet sein. Die Messöffnung kann dabei in Strömungsrichtung offen und im Wesentlichen parallel - in diesem Zusammenhang mit einer Abweichung bis zu 30° - zur Strömungsrichtung ausgerichtet sein. Zweckgemäß ist die Messöffnung derart in dem jeweiligen Gehäuse angeordnet, dass keine oder nur vernachlässigbar kleine Luftströmung an der Druckmessstelle beziehungsweise an der Messöffnung vorliegt. Insbesondere kann dadurch der gemessene statische Druck unabhängig von dem in dem jeweiligen Gehäuse herrschenden Staudruck erfasst werden.

Zusammenfassend kann in der erfindungsgemäßen Belüftungseinrichtung die Luftströmung zu dem jeweiligen Filterelement besser verteilt und dadurch das Filterelement geschont werden. Vorteilhafte weitere Ausgestaltungen der Belüftungseinrichtung ermöglichen ferner das in dem jeweiligen Filterelement abgeschiedene Wasser vereinfacht aus der Belüftungseinrichtung abzuleiten; die Belüftungsvorrichtung modular aufzubauen; ein Abdichten der Belüftungseinrichtung zu vereinfachen und die Belüftungseinrichtung genauer anzusteuern.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Ansicht einer erfindungsgemäßen Belüftungseinrichtung;
- Fig. 2: eine Ansicht der in Fig. 1 gezeigten Belüftungseinrichtung von vorne;
- Fig. 3: eine Ansicht der in Fig. 1 gezeigten Belüftungseinrichtung von hinten;
- Fig. 4: eine seitliche Ansicht der in Fig. 1 gezeigten Belüftungseinrichtung;
- Fig. 5: eine Ansicht der in Fig. 1 gezeigten Belüftungseinrichtung von oben;
- Fig. 6: eine Schnittansicht der in Fig. 1 gezeigten Belüftungseinrichtung;
- Fig. 7: eine Seitenansicht eines Belüftungsmodus der in Fig. 1 gezeigten Belüftungseinrichtung;
- Fig. 8: eine Ansicht des Belüftungsmodus der in Fig. 1 gezeigten Belüftungseinrichtung von oben;
- Fig. 9: eine Schnittansicht des Belüftungsmodus der in Fig. 1 gezeigten Belüftungseinrichtung;
- Fig. 10: eine Ansicht eines Strömungsadapters der in Fig. 1 gezeigten Belüftungseinrichtung;
- Fig. 11: eine teilweise Schnittansicht des Strömungsadapters der in Fig. 1 gezeigten Belüftungseinrichtung;
- Fig. 12: eine Ansicht des Strömungsadapters der in Fig. 1 gezeigten Belüftungseinrichtung von hinten;
- Fig. 13: eine Ansicht des Strömungsadapters der in Fig. 1 gezeigten Belüftungseinrichtung von oben;
- Fig. 14: eine Schnittansicht der in Fig. 1 gezeigten Belüftungseinrichtung;
- Fig. 15: eine weitere Schnittansicht der in Fig. 1 gezeigten Belüftungseinrichtung.

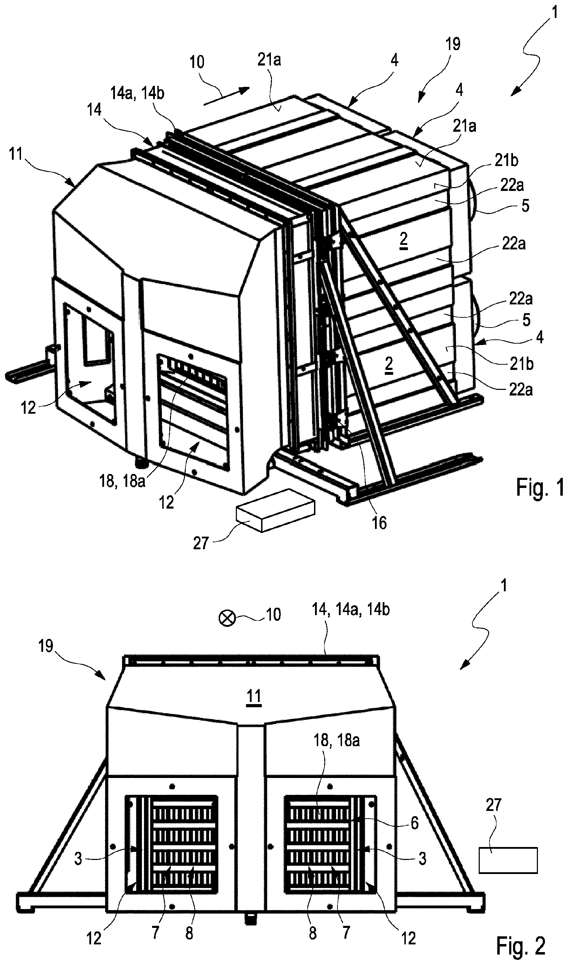

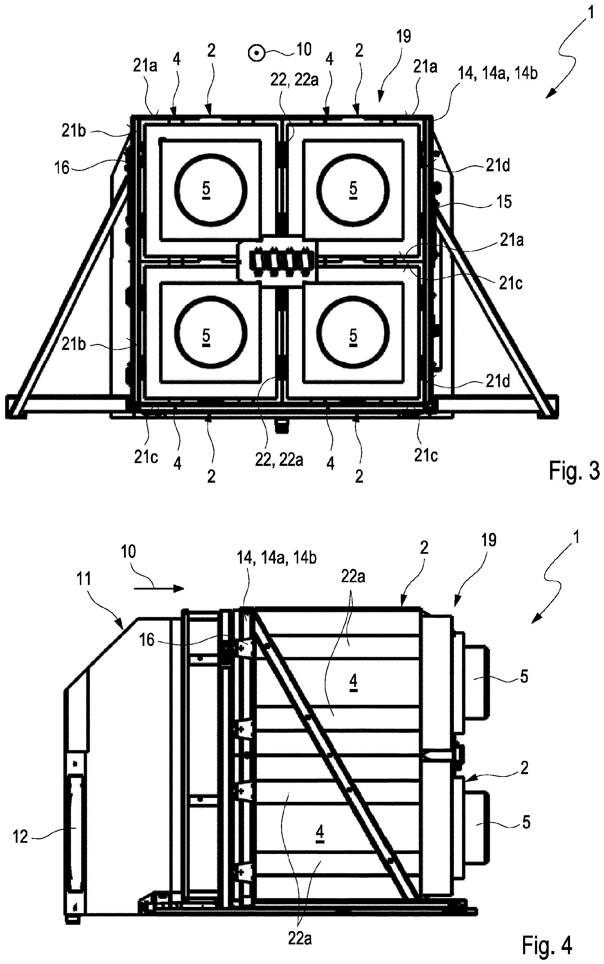

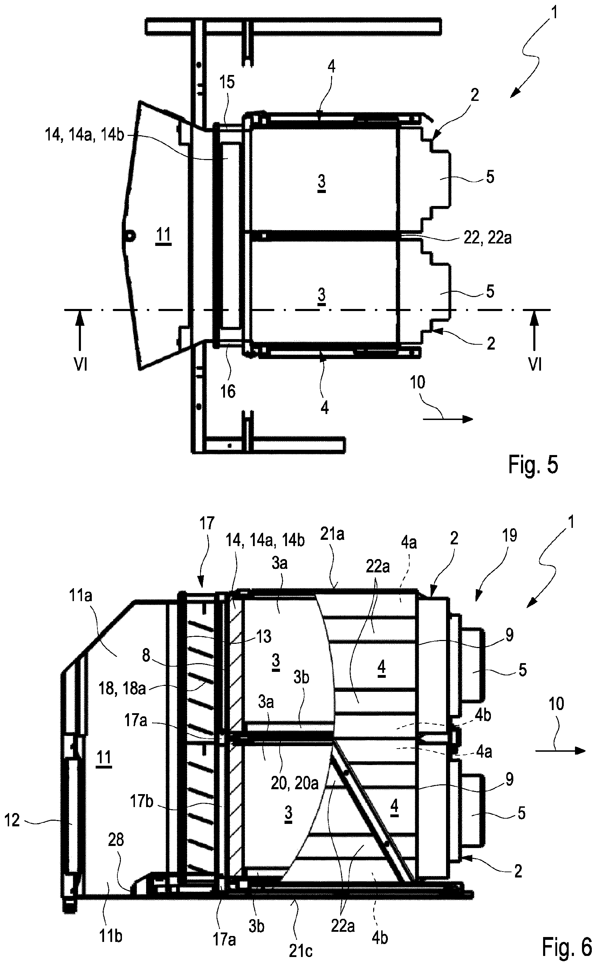

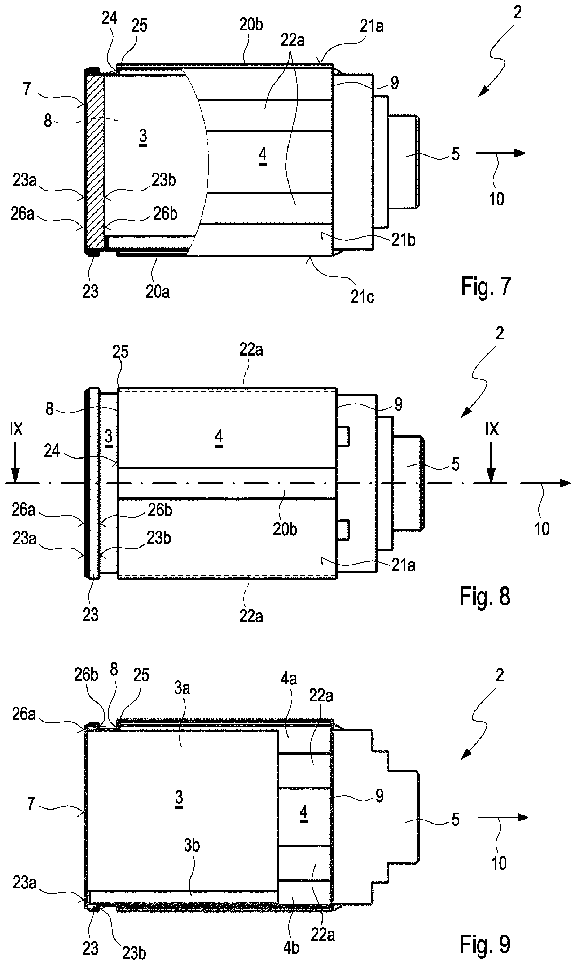

Fig. 1 zeigt eine Ansicht einer erfindungsgemäßen Belüftungseinrichtung 1 zum Filtern von Luft und zum Abscheiden von Wasseraerosolen aus Luft. Die Belüftungseinrichtung 1 ist in Fig. 2 von vorne; in Fig. 3 von hinten; in Fig. 4 von der Seite; in Fig. 5 von oben und in Fig. 6 im Schnitt gezeigt. Die Begriffe "vorne" und "hinten" beziehen sich hier und im Folgenden auf die die Belüftungseinrichtung 1 durchströmende Luft, die die eigebaute Belüftungseinrichtung 1 im Betriebszustand von "vorne" nach "hinten" parallel oder nahezu parallel zum Boden durchströmt. Die Begriffe "oben" und "unten" beziehen sich entsprechend auf die Ausrichtung der eingebauten Belüftungsvorrichtung 1 zum Boden. Die Belüftungseinrichtung 1 weist insgesamt vier Belüftungsmodule 2 auf, wobei das jeweilige Belüftungsmodul 2 ein Filterelement 3, ein Gehäuse 4 und ein Gebläse 5 aufweist. Die Belüftungsmodule 2 sind identisch und aneinander zu einem Stapelblock 19 lösbar gestapelt, so dass eine Gesamtströmungsfläche 6 der Belüftungseinrichtung 1 einem Vielfachen der Strömungsfläche 7 des einzelnen Belüftungsmoduls 2 entspricht. In dem jeweiligen Belüftungsmodul 2 ist das Filterelement 3 in dem jeweiligen Gehäuse 4 angeordnet und von einer Einlassöffnung 8 zu einer Auslassöffnung 9 des Gehäuses 4 in eine Strömungsrichtung 10 luftdurchströmbar. Das jeweilige Gebläse 5 ist an der Auslassöffnung 9 in Strömungsrichtung 10 hinter dem jeweiligen Gehäuse 4 festgelegt. Das jeweilige Gebläse 5 ist durch eine Steuerungsvorrichtung 27 gesteuert, die eine Messanordnung zum Erfassen des Luftvolumenstroms durch das jeweilige Filterelement 3 aufweist. In Fig. 7 bis Fig. 9 ist der Aufbau des Belüftungsmoduls 2 im Einzelnen gezeigt.

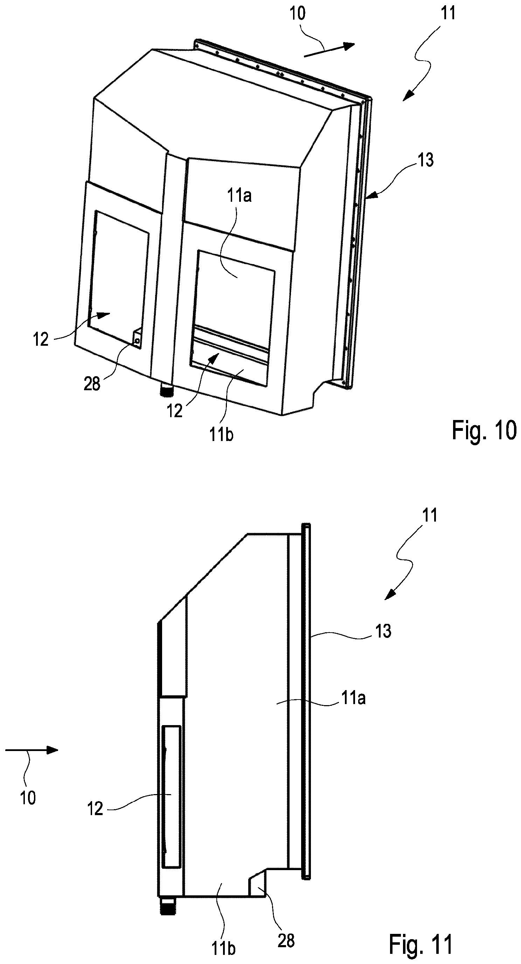

Ferner weist die Belüftungseinrichtung 1 einen Strömungsadapter 11 auf, der an der jeweiligen Einlassöffnung 8 in Strömungsrichtung 10 vor dem jeweiligen Gehäuse 4 festgelegt ist. Der Strömungsadapter 11 weist dabei zwei Lufteinlässe 12 und einen Luftauslass 13 auf, der mit der jeweiligen Einlassöffnung 8 des jeweiligen Gehäuses 4 fluidisch korrespondiert. Der Strömungsadapter 11 ist dabei einteilig - beispielweise aus Kunststoff - und vorzugsweise robust, so dass die durch die jeweiligen Gebläse 5 von außen angesaugte Luft bereits in dem Strömungsadapter 11 verteilt wird. Die von außen angesaugte Luft strömt dann gleichmäßig über die jeweiligen Filterelemente 3 und diese werden geschont. In Fig. 10 bis Fig. 13 ist der Aufbau des Strömungsadapters 11 im Einzelnen gezeigt.

In der Belüftungseinrichtung 1 sind folglich der Strömungsadapter 11, das jeweilige Gehäuse 4 mit dem jeweiligen Filterelement 3 und das jeweilige Gebläse 5 in Strömungsrichtung 10 nacheinander angeschlossen, so dass die Luft durch die Lufteinlässe 12 des Strömungsadapters 11 über den Luftauslass 13 zu der Einlassöffnung 8 des jeweiligen Gehäuses 4 und weiter durch das jeweilige Filterelement 3 strömen kann. Das jeweilige Filterelement 3 weist dabei - wie in Fig. 6 gezeigt ist - eine Rein- und eine Rohseite auf und ist aus einem Filtermaterial geformt. Das Filtermaterial ist hydrophob und das in der angesaugten Luft befindliche Wasser wird in einer Filtrierzone 3a auf der Rohseite abscheiden. Das in dem Filterelement 3 abgeschiedene Wasser setzt sich dann unter der Einwirkung der Schwerkraft in eine Drainagezone 3b des Filterelements 3 ab. Die Drainagezone 3b schließt an die Filtrierzone 3a des Filterelements 3 an und ist quer zur Strömungsrichtung 10 versetzt unterhalb der Filtrierzone 3a des Filterelements 3 angeordnet.

Die Filtrierzone 3a des Filterelements 3 korrespondiert mit einem Filtrierbereich 4a und die Drainagezone 3b mit einem Abtropfbereich 4b des Gehäuses 4. Der Filtrierbereich 4a und der Abtropfbereich 4b des Gehäuses 4 schließen dabei einander an. Ferner weist der Strömungsadapter 11 einen Strömungsbereich 11 a und einen Sammelbereich 11b auf, die aneinander anschließen. Der Strömungsbereich 11a des Strömungsadapters 11 korrespondiert dabei fluidisch mit den Einlassöffnungen 8 der jeweiligen Gehäuse 4 und der Sammelbereich 11b ist quer zur Strömungsrichtung 10 versetzt unterhalb des Strömungsbereichs 11a angeordnet. Ferner liegt der Sammelbereich 11b außerhalb einer Hauptluftströmung des Strömungsadapters 11.

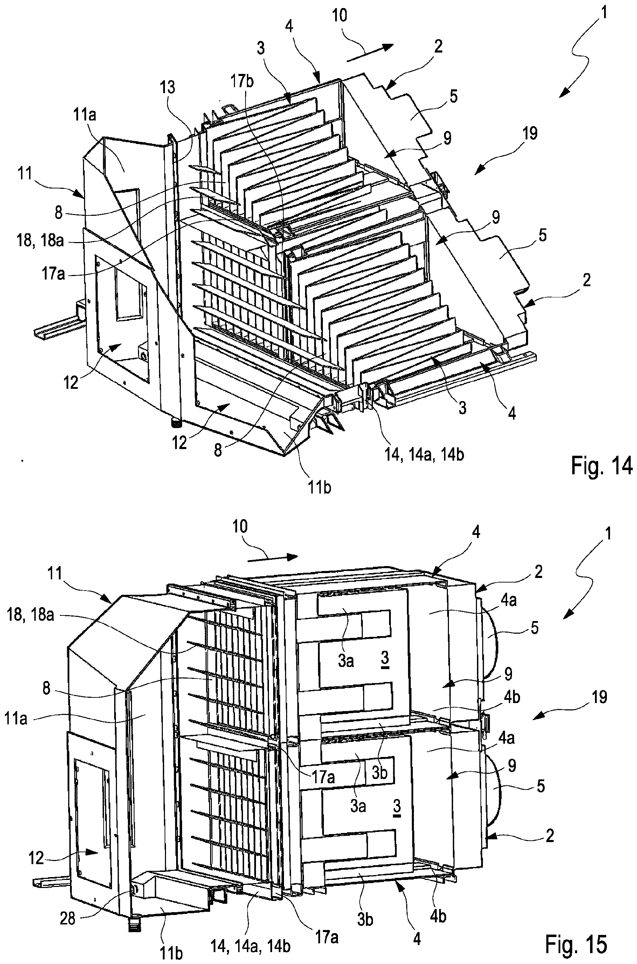

Die Belüftungsmodule 2 sind an den Strömungsadapter 11 durch einen Kopplungsrahmen 14 lösbar festgelegt. Der Kopplungsrahmen 14 weist dazu einen die jeweiligen Belüftungsmodule 2 quer zur Strömungsrichtung 10 einfassenden Modultragrahmen 14a und einen den Strömungsadapter 11 tragenden Adaptertragrahmen 14b auf. Der Modultragrahmen 14a und der Adaptertragrahmen 14b sind durch eine Scharniervorrichtung 15 aneinander klappbar gelagert und durch eine Verschlusseinheit 16 aneinander festlegbar. So kann der Kopplungsrahmen 14 geöffnet und beispielweise das Filterelement 3 in dem jeweiligen Belüftungsmodul 2 vereinfacht ausgewechselt werden. In dem Kopplungsrahmen 14 ist ferner eine Ablaufkanalanordnung 17 zum Ablaufen des in dem jeweiligen Filterelement 3 abgeschiedenen Wassers ausgebildet. Die Ablaufkanalanordnung 17 - wie in Fig. 6 gezeigt - weist dabei zwei übereinander angeordnete horizontale Rinnenkanäle 17a und einen vertikalen Ablaufkanal 17b auf. Der jeweilige Rinnenkanal 17a verbindet dabei jeweils die Abtropfbereiche 4b der in Reihe benachbarten Gehäuse 4 der Belüftungsmodule 2 mit der Ablaufkanalanordnung 17 und der Ablaufkanal 17b verbindet die beiden Rinnenkanäle 17a fluidisch miteinander. Durch die Ablaufkanalanordnung 17 kann das in dem jeweiligen Filterelement 3 abgeschiedene Wasser unter der Einwirkung der Schwerkraft durch die Ablaufkanalanordnung 17 nach außen geleitet werden. Der Aufbau der Ablaufkanalanordnung 17 ist im Einzelnen in Fig. 14 und Fig. 15 gezeigt. Ferner ist an dem Kopplungsrahmen 14 eine Durchlassanordnung 18 - hier eine Jalousienanordnung 18a - für die Einlassöffnung 8 des jeweiligen Gehäuses 4 quer zur Strömungsrichtung 10 festgelegt. Die Durchlassanordnung 18 ist zum Steuern des Luftvolumenstroms durch das jeweilige Belüftungsmodul 2 vorgesehen.

Fig. 7 zeigt eine Seitenansicht eines einzelnen Belüftungsmodus 2 in der Belüftungseinrichtung 1. Das Belüftungsmodul 2 ist ferner in Fig. 8 von oben und in Fig. 9 im Schnitt gezeigt. Um die einzelnen Belüftungsmodule 2 aneinander zu dem Stapelblock 19 lösbar zu stapeln, weist das jeweilige Belüftungsmodul 2 in der Belüftungseinrichtung 1 an seinem Gehäuse 4 eine sich in Strömungsrichtung 10 erstreckende Ausnehmung 20a und eine sich in Strömungsrichtung 10 erstreckende Ausformung 20b auf. Die Ausnehmung 20a und die Ausformung 20b der benachbarten Belüftungsmodule 2 stehen dabei quer zur Strömungsrichtung 10 im Eingriff und bilden eine sogenannte Nut-Feder-Verbindung. Die Ausnehmung 20a und die Ausformung 20b legen auf diese Weise die benachbarten Belüftungsmodule 2 zu dem Stapelblock 19 aneinander lösbar fest. Die Ausnehmung 20a und die Ausformung 20b sind an dem jeweiligen Gehäuse 4 an gegenüberliegenden Gehäuseseiten 21a und 21c ausgebildet, wie auch in Fig. 1 bis Fig. 6 und in Fig. 14 bis Fig. 15 gezeigt ist.

Ferner weist das jeweilige Belüftungsmodul 2 an seinem Gehäuse 4 an den gegenüberliegenden Gehäuseseiten 21b und 21d jeweils zwei sich in Strömungsrichtung 10 erstreckende Kabelteilvertiefungen 22a auf. In dem Stapelblock 19 liegen die jeweiligen Kabelteilvertiefungen 22a an den Gehäusen 4 der benachbarten Belüftungsmodule 2 in Strömungsrichtung 10 aneinander an und bilden eine Kabelöffnung 22. Die Kabelteilvertiefungen 22a sind identisch ausgestaltet, so dass eine Querschnittsfläche der Kabelöffnung 22 einer doppelten Querschnittsfläche der einzelnen Kabelteilvertiefung 22a entspricht. Durch die Kabelöffnung 22 können die Kabelleitungen in Strömungsrichtung 10 zwischen den jeweiligen Belüftungsmodulen 2 geführt werden, so dass ohne einen zusätzlichen Platzbedarf elektrische Bestandteile der Belüftungseinrichtung 1 in Strömungsrichtung 10 vor und nach dem jeweiligen Belüftungsmodul 2 miteinander verbunden werden können. Die Kabelöffnungen 22 aus den aneinander anliegenden Kabelteilvertiefungen 22a sind auch in Fig. 1 bis Fig. 6 und Fig. 14 bis Fig. 15 gezeigt.

Um das Filterelement 3 quer zur Strömungsrichtung 10 in dem Gehäuse 4 luftdicht festzulegen, weist das Filterelement 3 in dem jeweiligen Belüftungsmodul 2 einen umlaufenden Dichtrand 23 auf. Der Dichtrand 23 liegt dabei einseitig an einer die Einlassöffnung 8 einfassenden Dichtfläche 24 des Gehäuses 4 und andersseitig an dem Kopplungsrahmen 14 an. Der Dichtrand 23 ist an dem Filterelement 3 ausgebildet, so dass beim Einsetzen oder beim Auswechseln des jeweiligen Filterelements 3 in der Belüftungseinrichtung 1 auch der Dichtrand 23 eingesetzt oder ausgewechselt wird. Die Dichtfläche 24 ist dabei durch einen die Einlassöffnung 8 einfassenden Gehäuserahmen 25 gebildet. Zum Abdichten ist an einer dem Gehäuse 4 und dem Kopplungsrahmen 14 zugewandten Seitenflächen 23a und 23b des Dichtrands 23 jeweils eine elastische Dichtung 26a und 26b festgelegt - beispielweise angeklebt.

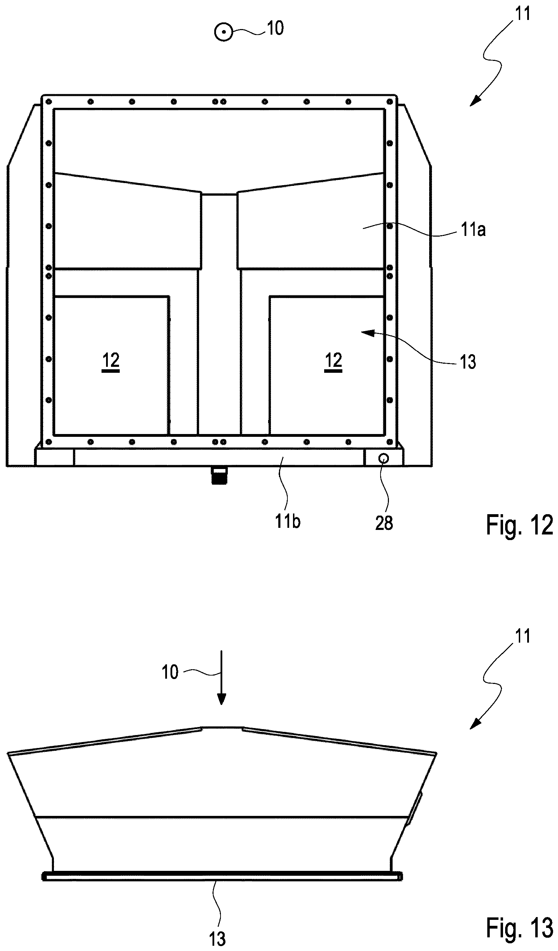

Fig. 10 zeigt eine Ansicht des Strömungsadapters 11. Ferner ist der Strömungsadapter 11 in Fig. 11 teilweise im Schnitt; in Fig. 12 von hinten und in Fig. 13 von oben gezeigt. Der Strömungsadapter 11 weist die Lufteinlässe 12 und den Luftauslass 13 auf, der mit der jeweiligen Einlassöffnung 8 des jeweiligen Gehäuses 4 fluidisch korrespondiert. Der Strömungsadapter 11 ist einteilig und bevorzugt aus Kunststoff geformt. Dadurch wird die durch die jeweiligen Gebläse 5 von außen angesaugte Luft bereits in dem Strömungsadapter 11 verteilt und strömt gleichmäßig über die jeweiligen Filterelemente 3. Der Strömungsadapter 11 weist dabei den Strömungsbereich 11a und den Sammelbereich 11b auf, die aneinander anschließen. Der Strömungsbereich 11a des Strömungsadapters 11 korrespondiert dabei fluidisch mit den Einlassöffnungen 8 der jeweiligen Gehäuse 4 und der Sammelbereich 11b ist quer zur Strömungsrichtung 10 versetzt unterhalb des Strömungsbereichs 11a angeordnet. Ferner liegt der Sammelbereich 11b außerhalb einer Hauptluftströmung in dem Strömungsadapter 11.

Wie in Fig. 1 bis Fig. 6 bereits erläutert, ist die Ablaufkanalanordnung 17 in dem Kopplungsrahmen 14 ausgebildet. Diese verbindet fluidisch den Sammelbereich 11b des Strömungsadapters 11 und die Abtropfbereiche 4b der jeweiligen Gehäuse 4 fluidisch miteinander. Durch die Ablaufkanalanordnung 17 kann das in dem Filterelement 3 abgeschiedene Wasser aus dem jeweiligen Gehäuse 4 in den Sammelbereich 17 des Strömungsadapters 11 entgegen Strömungsrichtung 10 geführt werden. Dazu ist der Sammelbereich 11b des Strömungsadapters 11 mit der Ablaufkanalanordnung 17 über eine Ablauföffnung 28 fluidisch verbunden, wobei die Ablaufkanalanordnung 17 an ihrer tiefsten Stelle in dem unteren Rinnenkanal 17a über eine Ablaufleitung - hier nicht gezeigt - mit der Ablauföffnung 28 verbunden ist. Durch die Ablauföffnung 28 wird das in den Filterelementen 3 abgeschiedene Wasser in den Strömungsadapter 11 geleitet und in dem Sammelbereich 11b des Strömungsadapters 11 entgegen der Strömungsrichtung 10 nach außen geführt. Der Aufbau der Ablaufkanalanordnung 17 ist im Einzelnen in Fig. 6, Fig. 14 und Fig. 15 gezeigt.

Fig. 14 und Fig. 15 zeigen Schnittansichten der Belüftungseinrichtung 1. In der Belüftungseinrichtung 1 sind an dem Kopplungsrahmen 14 einseitig die einzelnen Belüftungsmodule 2 zu dem Stapelblock 19 und andersseitig der Strömungsadapter 11 festgelegt. In dem Kopplungsrahmen 14 ist die Ablaufkanalanordnung 17 ausgebildet, die zwei übereinander angeordnete horizontale Rinnenkanäle 17a und einen vertikalen Ablaufkanal 17b aufweist. Der jeweilige Rinnenkanal 17a ist in der eingebauten Belüftungseinrichtung horizontal mit einer Abweichung bis zu 10° zum Boden ausgerichtet, um das in dem Filterelement 3 abgeschiedene Wasser horizontal in der Ablaufkanalanordnung 17 unter der Einwirkung der Schwerkraft leiten zu können. Der jeweilige Rinnenkanal 17a verbindet dabei jeweils die Abtropfbereiche 4b der in Reihe benachbarten Gehäuse 4 der Belüftungsmodule 2 in dem Stapelblock 19. Die beiden Rinnenkanäle 17a sind über den Ablaufkanal 17b vertikal fluidisch verbunden. Der vertikale Ablaufkanal 17b ist in der eingebauten Belüftungseinrichtung 1 vertikal mit einer Abweichung bis zu 10° zum Boden ausgerichtet, so dass das in dem Filterelement 3 abgeschiedene Wasser unter der Einwirkung der Schwerkraft aus dem oberen Rinnenkanal 17a zu dem unteren Rinnenkanal 17a geleitet werden kann. Das in den Filterelementen 3 abgeschiedene Wasser wird anschließend aus der Ablaufkanalanordnung 17 in den Sammelbereich 11b des Strömungsadapters 11 und weiter nach außen geleitet. Dazu ist der untere Rinnenkanal 17a an seiner tiefsten Stelle durch die Ablauföffnung 28 mit dem Sammelbereich 11b des Strömungsadapters fluidisch verbunden. Auf diese vorteilhafte Weise sind die mehreren Gehäuse 4 und die mehreren Filterelemente 3 über die Ablaufkanalanordnung 17 in dem Kopplungsrahmen 14 miteinander fluidisch verbunden und das in den mehreren Filterelementen 3 abgeschiedene Wasser kann vereinfacht aus der Belüftungseinrichtung 1 abgeleitet werden.

Zusammenfassend ist die erfindungsgemäße Belüftungseinrichtung 1 modular aufbaubar und die identisch ausgestalteten Belüftungsmodule 2 können auf einfache Weise gegeneinander ausgetauscht werden; ferner kann das in dem jeweiligen Filterelement 3 abgeschiedene Wasser vereinfacht aus der Belüftungseinrichtung 1 abgeleitet werden; ein Abdichten der Belüftungseinrichtung 1 kann vereinfacht und die Belüftungseinrichtung 1 kann genauer angesteuert und die Luftströmung in dem jeweiligen Filterelement 3 besser verteilt werden.

## Patentansprüche

1. Belüftungseinrichtung (1) zum Filtern von Luft und zum Abscheiden von Wasseraerosolen aus Luft,
- wobei die Belüftungseinrichtung (1) mehrere Filterelemente (3), mehrere Gehäuse (4), mehrere Gebläse (5) und einen Strömungsadapter (11) aufweist,
- wobei das jeweilige Filterelement (3) in dem jeweiligen Gehäuse (4) von einer Einlassöffnung (8) zu einer Auslassöffnung (9) des jeweiligen Gehäuses (4) in eine Strömungsrichtung (10) luftdurchströmbar festgelegt ist,
- wobei das jeweilige Gebläse (5) an der Auslassöffnung (9) in Strömungsrichtung (10) hinter dem jeweiligen Gehäuse (4) und der Strömungsadapter (11) an der Einlassöffnung (8) in Strömungsrichtung (10) vor dem jeweiligen Gehäuse (4) festgelegt sind,
**dadurch gekennzeichnet,**
- **dass** das jeweilige Filterelement (3), das jeweilige Gehäuse (4) und das jeweilige Gebläse (5) jeweils ein Belüftungsmodul (2) mit einer Strömungsfläche (7) bilden,
- **dass** mehrere identische Belüftungsmodule (2) zu der Belüftungseinrichtung (1) aneinander derart lösbar gestapelt sind, dass eine Gesamtströmungsfläche (6) der Belüftungseinrichtung (1) einem Vielfachen der Strömungsfläche (7) des einzelnen Belüftungsmoduls (2) entspricht, und
- **dass** der Strömungsadapter (11) zum gleichmäßigen Verteilen von der durch die jeweiligen Gebläse (5) von außen angesaugten Luft über die Gesamtströmungsfläche (6) vorgesehen und einteilig und bevorzugt aus Kunststoff ist, so dass die jeweiligen Filterelemente (3) durch die durch die jeweiligen Gebläse (5) von außen angesaugte Luft gleichmäßig durchströmbar sind.

2. Belüftungseinrichtung nach Anspruch 1,
**dadurch gekennzeichnet,**
**dass** der Strömungsadapter (11) einen Sammelbereich (11b) und einen Strömungsbereich (11a) aufweist, wobei der Strömungsbereich (11a) des wenigstens einen Strömungsadapters (11) mit seinem Luftauslass (13) und mit den Einlassöffnungen (8) der jeweiligen Gehäuse (4) luftleitend korrespondiert und der Sammelbereich (11b) quer zur Strömungsrichtung (10) versetzt unterhalb des Strömungsbereichs (11a) und somit unterhalb des Luftauslasses (13) und außerhalb einer Hauptluftströmung des wenigstens einen Strömungsadapters (11) angeordnet ist.

3. Belüftungseinrichtung nach Anspruch 2,
**dadurch gekennzeichnet,**
**dass** eine Ablaufkanalanordnung (17) den Sammelbereich (11b) des Strömungsadapters (11) und einen Abtropfbereich (4b) des jeweiligen Gehäuses (4) fluidisch miteinander verbindet, wobei der jeweilige Abtropfbereich (4b) mit einer Drainagezone (3b) des jeweiligen Filterelements (3) zum Abführen des in dem Filterelement (3) abgeschiedenen Wassers korrespondiert.

4. Belüftungseinrichtung nach Anspruch 3,
**dadurch gekennzeichnet,**
**dass** der Strömungsadapter (11) eine aus dem Sammelbereich (11b) nach außen führende Adapterauslassöffnung aufweist, die fluidleitend mit der Ablaufkanalanordnung (17) verbunden ist.

5. Belüftungseinrichtung nach einem der Ansprüche 2 bis 4,
**dadurch gekennzeichnet,**
**dass** die Ablaufkanalanordnung (17) in einem Kopplungsrahmen (14) ausgebildet ist, der zwischen dem jeweiligen Gehäuse (4) und dem Strömungsadapter (11) quer zur Strömungsrichtung (10) luftdicht festgelegt ist.

6. Belüftungseinrichtung nach Anspruch 5,
**dadurch gekennzeichnet,**
- **dass** die Ablaufkanalanordnung (17) wenigstens einen horizontalen Rinnenkanal (17a), bevorzugt aus einem u-förmigen metallischen Profil, aufweist, der mit einem Abtropfbereich (4b) des jeweiligen Gehäuses (4) fluidisch verbunden ist, und/oder
- **dass** die Ablaufkanalanordnung (17) wenigstens zwei übereinander angeordnete Rinnenkanäle (17a) aufweist, die durch wenigstens einen vertikalen Ablaufkanal (17b), bevorzugt aus einem u-förmigen oder I-förmigen metallischen Profil, fluidisch miteinander verbunden sind.

7. Belüftungseinrichtung nach einem der vorangehenden Ansprüche,
**dadurch gekennzeichnet,**
- **dass** das jeweilige Filterelement (3) einen umlaufenden Dichtrand (23) aufweist, wobei der Dichtrand (23) einseitig an einer die Einlassöffnung (8) einfassenden Dichtfläche (24) des jeweiligen Gehäuses (4) und andersseitig an einem Kopplungsrahmen (14) anliegt und das jeweilige Gehäuse (4) um die Einlassöffnung (8) zu dem Kopplungsrahmen (14) quer zur Strömungsrichtung (10) abdichtet, und
- **dass** an einer dem jeweiligen Gehäuse (4) und/oder dem Kopplungsrahmen (14) zugewandten Seitenfläche (23a, 23b) des Dichtrands (23) eine elastische Dichtung (26a, 26b) festgelegt ist.

8. Belüftungseinrichtung nach einem der vorangehenden Ansprüche,
**dadurch gekennzeichnet,**
- **dass** wenigstens zwei der in der Belüftungseinrichtung (1) benachbarten Belüftungsmodule (2) an seinen Gehäusen (4) jeweils eine sich in Strömungsrichtung (10) erstreckende Kabelteilvertiefung (22a) aufweisen, wobei die jeweiligen Kabelteilvertiefungen (22a) an den Gehäusen (4) der benachbarten Belüftungsmodule (2) in Strömungsrichtung (10) aneinander anliegen und eine Kabelvertiefung (22) bilden.

9. Belüftungseinrichtung nach einem der Ansprüche 1 bis 8,
**dadurch gekennzeichnet,**
**dass** eins der in der Belüftungseinrichtung (1) benachbarten Belüftungsmodule (2) an seinem Gehäuse (4) eine sich in Strömungsrichtung (10) erstreckende Ausnehmung (20a) und ein anderes der in der Belüftungseinrichtung (1) benachbarten Belüftungsmodule (2) an seinem Gehäuse (4) eine sich in Strömungsrichtung (10) erstreckende Ausformung (20b) aufweisen, wobei die jeweilige Ausnehmung (20a) und die jeweilige Ausformung (20b) quer zur Strömungsrichtung (10) im Eingriff stehen und die benachbarten Belüftungsmodule (2) aneinander lösbar festlegen.

10. Belüftungseinrichtung nach Anspruch einem der Ansprüche 1 bis 9,
**dadurch gekennzeichnet,**
**dass** die Belüftungseinrichtung (1) vier Belüftungsmodule (2) und den einzigen Strömungsadapter (11) aufweist, wobei die Belüftungsmodule (2) zu einem 2x2 Stapelblock (19) aneinander lösbar festgelegt sind und mittels eines Kopplungsrahmens (14) an dem Strömungsadapter (11) luftleitend festgelegt sind.

11. Belüftungseinrichtung nach einem der Ansprüche 1 bis 10,
**dadurch gekennzeichnet,**
- **dass** der Kopplungsrahmen (14) einen die jeweiligen Belüftungsmodule (2) quer zur Strömungsrichtung (10) einfassenden Modultragrahmen (14a) und einen den Strömungsadapter (11) tragenden Adaptertragrahmen (14b) aufweist, die durch eine Scharniervorrichtung (15) aneinander klappbar oder verschiebbar gelagert und durch eine Verschlusseinheit (16) aneinander festlegbar sind,
- **dass** insbesondere vorgesehen sein kann, dass eine Ablaufkanalanordnung (17) in dem Adaptertragrahmen (14b) ausgebildet ist.

12. Belüftungseinrichtung nach einem der Ansprüche 1 bis 11,
**dadurch gekennzeichnet,**
**dass** an dem Kopplungsrahmen (14) für die Einlassöffnung (8) des jeweiligen Gehäuses (4) jeweils eine Durchlassanordnung (18), bevorzugt eine Jalousieanordnung (18a), zum Steuern des Luftvolumenstroms durch das jeweilige Belüftungsmodul (2) quer zur Strömungsrichtung (10) festgelegt ist.

13. Belüftungseinrichtung nach einem der vorangehenden Ansprüche,
**dadurch gekennzeichnet,**
- **dass** das jeweilige Gebläse (5) durch eine Steuerungsvorrichtung (27) gesteuert ist, die wenigstens eine Messanordnung zum Erfassen des Luftvolumenstroms durch das wenigstens eine Filterelement (3) aufweist, und
- **dass** die wenigstens eine Messanordnung eine Druckmesseinheit zum Erfassen eines statischen Drucks aufweist, die innerhalb der Belüftungseinrichtung (1) angeordnet ist.

14. Belüftungseinrichtung nach Anspruch 13,
**dadurch gekennzeichnet,**
- **dass** die jeweilige Druckmesseinheit mit einer Druckmessstelle fluidisch verbunden ist oder eine solche Druckmessstelle aufweist, wobei die Druckmessstelle innerhalb des wenigstens einen Gehäuses (4) im Bereich der Einlassöffnung (8) angeordnet ist und dort eine Messöffnung aufweist, und/oder
- **dass** die jeweilige Druckmessstelle oder deren Messöffnung in einem Abtropfbereich (4b) des wenigstens einen Gehäuses (4) angeordnet ist.

15. Belüftungseinrichtung nach Anspruch 14,
**dadurch gekennzeichnet,**
- **dass** das Gehäuse (4) einen die Einlassöffnung (8) einfassenden Gehäuserahmen (25) aufweist, der eine radial nach innen vorstehende Einlassstufe bildet, und
- **dass** die Druckmessstelle an der Einlassstufe angeordnet ist, wobei die Messöffnung in die Strömungsrichtung (10) offen ist und im Wesentlichen parallel zur Strömungsrichtung (10) ausgerichtet ist.

## Claims

1. A ventilation device (1) for filtering air and for precipitating water aerosols from air,
- wherein the ventilation device (1) has a plurality of filter elements (3), a plurality of housings (4), a plurality of fans (5) and a flow adapter (11),
- wherein the respective filter element (3) is fixed in the respective housing (4) such that air can flow through from an inlet opening (8) to an outlet opening (9) of the respective housing (4) in a flow direction (10),
- wherein the respective fan (5) is fixed on the outlet opening (9) downstream of the respective housing (4) in the flow direction (10) and the flow adapter (11) is fixed on the inlet opening (8) upstream of the respective housing (4) in the flow direction (10),
**characterized**
- **in that** the respective filter element (3), the respective housing (4) and the respective fan (5) in each case form a ventilation module (2) with a flow surface (7),
- **in that** a plurality of identical ventilation modules (2) are stacked on one another in a detachable manner to form the ventilation device (1), such that a total flow surface (6) of the ventilation device (1) corresponds to a multiple of the flow surface (7) of the individual ventilation module (2), and
- **in that** the flow adapter (11) is provided for evenly distributing the air sucked in from the outside by the respective fan (5) over the total flow surface (6) and is in one piece and preferably made from plastic, so that the air sucked in from outside by the respective fan (5) can flow evenly through the respective filter elements (3).

2. The ventilation device according to Claim 1,
**characterized**
**in that** the flow adapter (11) has a collecting region (11b) and a flow region (11a), wherein the flow region (11a) of the at least one flow adapter (11) corresponds with the air outlet (13) thereof and with the inlet openings (8) of the respective housing (4) in an air-conveying manner and the collecting region (11b) is arranged offset transversely to the flow direction (10) below the flow region (11a) and thus below the air outlet (13) and outside of a main air flow of the at least one flow adapter (11).

3. The ventilation device according to Claim 2,
**characterized**
**in that** a drainage channel arrangement (17) connects the collecting region (11b) of the flow adapter (11) and a drip-off region (4b) of the respective housing (4) to one another in a fluidic manner, wherein the respective drip-off region (4b) corresponds with a drainage zone (3b) of the respective filter element (3) for draining the water precipitated in the filter element (3).

4. The ventilation device according to Claim 3,
**characterized**
**in that** the flow adapter (11) has an adapter outlet opening leading outwards from the collecting region (11b), which is connected in a fluid-conveying manner to the drainage channel arrangement (17).

5. The ventilation device according to one of Claims 2 to 4,
**characterized**
**in that** the drainage channel arrangement (17) is constructed in a coupling frame (14), which is fixed in an airtight manner between the respective housing (4) and the flow adapter (11) transversely to the flow direction (10).

6. The ventilation device according to Claim 5,
**characterized**
- **in that** the drainage channel arrangement (17) has at least one horizontal gulley channel (17a), preferably made from a u-shaped metallic profile, which is connected in a fluidic manner to a drip-off region (4b) of the respective housing (4), and/or
- **in that** the drainage channel arrangement (17) has at least two gulley channels (17a) arranged above one another, which are connected to one another in a fluidic manner by at least one vertical drainage channel (17b), preferably made from a u-shaped or I-shaped metallic profile.

7. The ventilation device according to one of the preceding claims,
**characterized**
- **in that** the respective filter element (3) has a peripheral sealing edge (23), wherein the sealing edge (23) bears on one side against a sealing surface (24) of the respective housing (4) surrounding the inlet opening (8) and on the other side against a coupling frame (14) and seals the respective housing (4) around the inlet opening (8) to the coupling frame (14) transversely to the flow direction (10), and
- **in that** an elastic seal (26a, 26b) is secured on one of the side surfaces (23a, 23b) of the sealing edge (23) facing the respective housing (4) and/or the coupling frame (14).

8. The ventilation device according to one of the preceding claims,
**characterized**
- **in that** at least two neighbouring ventilation modules (2) in the ventilation device (1) in each case have a partial cable recess (22a) extending in the flow direction (10) on the housings (4) thereof, wherein the respective partial cable recesses (22a) bear against one another at the housings (4) of the neighbouring ventilation modules (2) in the flow direction (10) and form a cable recess (22).

9. The ventilation device according to one of Claims 1 to 8,
**characterized**
**in that** one of the neighbouring ventilation modules (2) in the ventilation device (1) has a recess (20a) on its housing (4) extending in the flow direction (10) and another of the neighbouring ventilation modules (2) in the ventilation device (1) has a moulding (20b) on its housing (4) extending in the flow direction (10), wherein the respective recess (20a) and the respective moulding (20b) are in engagement transversely to the flow direction (10) and fix the neighbouring ventilation modules (2) to one another in a detachable manner.

10. The ventilation device according to one of Claims 1 to 9,
**characterized**
**in that** the ventilation device (1) has four ventilation modules (2) and the single flow adapter (11), wherein the ventilation modules (2) are fixed to one another in a detachable manner to form a 2×2 stacked block (19) and are fixed by means of a coupling frame (14) on the flow adapter (11) in an air-conveying manner.

11. The ventilation device according to one of Claims 1 to 10,
**characterized**
- **in that** the coupling frame (14) has a module support frame (14a) surrounding the respective ventilation modules (2) transversely to the flow direction (10) and an adapter support frame (14b) supporting the flow adapter (11), which are mounted such that they can be folded or moved together by means of a hinge apparatus (15) and can be fixed to one another by means of a closure unit (16),
- **in that** it may in particular be provided that a drainage channel arrangement (17) is constructed in the adapter support frame (14b).

12. The ventilation device according to one of Claims 1 to 11,
**characterized**
**in that** a passage arrangement (18), preferably a jalousie arrangement (18a), is fixed on the coupling frame (14) for the inlet opening (8) of the respective housing (4) in each case, for controlling the volumetric air flow through the respective ventilation module (2), transversely to the flow direction (10).

13. The ventilation device according to one of the preceding claims,
**characterized**
- **in that** the respective fan (5) is controlled by a control device (27), which has at least one measuring arrangement for detecting the volumetric air flow through the at least one filter element (3), and
- **in that** the at least one measuring arrangement has a pressure measuring unit for detecting a static pressure, which is arranged inside the ventilation device (1).

14. The ventilation device according to Claim 13,
**characterized**
- **in that** the respective pressure measuring unit is connected in a fluidic manner to a pressure measurement point or has such a pressure measurement point, wherein the pressure measurement point is arranged inside the at least one housing (4) in the region of the inlet opening (8) and has a measurement opening there, and/or
- **in that** the respective pressure measurement point or the measurement opening thereof is arranged in a drip-off region (4b) of the at least one housing (4).

15. The ventilation device according to Claim 14,
**characterized**
- **in that** the housing (4) can have a housing frame (25) surrounding the inlet opening (8), which forms a radially inwardly protruding inlet stage, and
- **in that** the pressure measurement point is arranged at the inlet stage, wherein the measurement opening is open in the flow direction (10) and is aligned substantially parallel to the flow direction (10).

## Revendications

1. Dispositif de ventilation (1), destiné à filtrer de l'air et à séparer des aérosols aqueux de l'air,
- le dispositif de ventilation (1) comportant plusieurs éléments filtrants (3), plusieurs boîtiers (4), plusieurs ventilateurs (5) et un adaptateur de débit (11),
- l'élément filtrant (3) respectif étant fixé dans le boîtier (4) respectif de manière à être traversé par de l'air, d'un orifice d'entrée (8) vers un orifice de sortie (9) du boîtier (4) dans un sens d'écoulement (10),
- le ventilateur (5) respectif étant fixé sur l'orifice de sortie (9), derrière le boîtier (4) respectif, dans le sens d'écoulement (10) et l'adaptateur de débit (11) étant fixé sur l'orifice d'entrée (8) devant le boîtier (4) respectif, dans le sens d'écoulement (10),
**caractérisé**
- **en ce que** l'élément filtrant (3), respectif, le boîtier (4) respectif et le ventilateur (5) respectif forment chaque fois un module de ventilation (2) doté d'une surface d'écoulement (7),
- **en ce que** plusieurs modules de ventilation (2) identiques sont empilés les uns avec les autres de manière amovible pour former le dispositif de ventilation (1), de telle sorte qu'une surface totale d'écoulement (6) du dispositif de ventilation (1) corresponde à un multiple de la surface d'écoulement (7) du module de ventilation (2) individuel, et
- **en ce que** pour la distribution régulière de l'air aspiré à partir de l'extérieur par les ventilateurs (5) respectifs, l'adaptateur de débit (11) est prévu sur la surface totale d'écoulement (6), et est d'un seul tenant et de préférence en matière plastique, de telle sorte que les éléments filtrants (3) respectifs soient susceptibles d'être traversés régulièrement par l'air aspiré à partir de l'extérieur par les ventilateurs (5) respectifs.

2. Dispositif de ventilation selon la revendication 1,
**caractérisé**
**en ce que** l'adaptateur de débit (11) comporte une région collectrice (11b) et une région d'écoulement (11a), la région d'écoulement (11a) de l'au moins un adaptateur de débit (11) correspondant de manière conductrice d'air avec sa sortie d'air (13) et avec les entrées d'air (8) des boîtiers (4) respectifs et la région collectrice (11b) étant placée à la transversale du sens d'écoulement (10) avec un décalage en-dessous de la région d'écoulement (11a) et ainsi en-dessous de la sortie d'air (13) et à l'extérieur d'un écoulement d'air principal de l'au moins un adaptateur de débit (11).

3. Dispositif de ventilation selon la revendication 2,
**caractérisé**
**en ce qu'**un ensemble de canaux d'évacuation (17) relie l'une à l'autre de manière fluidique la région collectrice (11b) de l'adaptateur de débit (11) et une région d'égouttement (4b) du boîtier (4) respectif, la région d'égouttement (4b) respective correspondant avec une zone de drainage (3b) de l'élément filtrant (3) respectif, pour l'évacuation de l'eau séparée dans l'élément filtrant (3).

4. Dispositif de ventilation selon la revendication 3,
**caractérisé**
**en ce que** l'adaptateur de débit (11) comporte un orifice de sortie d'adaptateur menant vers l'extérieur à partir de la région collectrice (11b) qui est relié de manière fluidique avec l'ensemble de canaux d'évacuation (17).

5. Dispositif de ventilation selon l'une quelconque des revendications 2 à 4,
**caractérisé**
**en ce que** l'ensemble de canaux d'évacuation (17) est conçu dans un cadre de couplage (14) qui est fixé de manière étanche à l'air entre le boîtier (4) respectif et l'adaptateur de débit (11), à la transversale du sens d'écoulement (10).

6. Dispositif de ventilation selon la revendication 5,
**caractérisé**
- **en ce que** l'ensemble de canaux d'évacuation (17) comporte au moins une canalisation à caniveau (17a) horizontale, de préférence en un profilé métallique en forme de U, qui est reliée de manière fluidique avec une région d'égouttement (4b) du boîtier (4) respectif et/ou
- **en ce que** l'ensemble de canaux d'évacuation (17) comporte au moins deux canalisations à caniveau (17a) superposées qui sont reliées l'une à l'autre de manière fluidique par au moins une canalisation d'évacuation (17b) verticale, de préférence en un profilé métallique en forme de U ou en forme de L.

7. Dispositif de ventilation selon l'une quelconque des revendications précédentes,
**caractérisé**
- **en ce que** l'élément filtrant (3) respectif comporte un bord d'étanchéité (23) périphérique, le bord d'étanchéité (23) étant adjacent par un côté à une surface d'étanchéité (24) du boîtier (4) respectif bordant l'orifice d'entrée (8) et par l'autre côté à un cadre de couplage (14) et assurant l'étanchéité du boîtier (4) respectif autour de l'orifice d'entrée (8) vers le cadre de couplage (14), à la transversale du sens d'écoulement (10), et
- **en ce que** sur une surface latérale (23a, 23b) du bord d'étanchéité (23) qui fait face au boîtier (4) respectif et/ou au cadre de couplage (14) est fixé un joint élastique (26a, 26b).

8. Dispositif de ventilation selon l'une quelconque des revendications précédentes,
**caractérisé**
- **en ce qu'**au moins deux des modules de ventilation (2) voisins dans le dispositif de ventilation (1) comportent sur leurs boîtiers (4) chaque fois un sillon partiel de câble (22a) s'étendant dans le sens d'écoulement (10), les sillons partiels de câble (22a) respectifs étant adjacents l'un à l'autre sur les boîtiers (4) des modules de ventilation (2) voisins dans le sens d'écoulement (10) et formant un sillon de câble (22).

9. Dispositif de ventilation selon l'une quelconque des revendications 1 à 8,
**caractérisé**
**en ce que** l'un des modules de ventilation (2) voisins dans le dispositif de ventilation (1) comporte sur son boîtier (4) un évidement (20a) s'étendant dans le sens d'écoulement (10) et un autre des modules de ventilation (2) voisins dans le dispositif de ventilation (1) comporte sur son boîtier (4) un moulage (20b) s'étendant dans le sens d'écoulement (10), l'évidement (20a) respectif et le moulage (20b) respectif s'engageant à la transversale du sens d'écoulement (10) et fixant l'un à l'autre de manière amovible les modules de ventilation (2).

10. Dispositif de ventilation selon l'une quelconque des revendications 1 à 9,
**caractérisé**
**en ce que** le dispositif de ventilation (1) comporte quatre modules de ventilation (2) et l'unique adaptateur de débit (11), les modules de ventilation (2) étant fixés les uns aux autres de manière amovible en un bloc empilé 2x2 (19) et étant fixés de manière à conduire l'air sur l'adaptateur de débit (11) au moyen d'un cadre de couplage (14).

11. Dispositif de ventilation selon l'une quelconque des revendications 1 à 10,
**caractérisé**
- **en ce que** le cadre de couplage (14) comporte un cadre porteur modulaire (14a) bordant les modules de ventilation (2) à la transversale du sens d'écoulement (10) et un cadre d'adaptateur (14b) portant l'adaptateur de débit (11), qui sont montés l'un à l'autre de manière rabattable ou translatable au moyen d'un dispositif de charnières (15) et qui sont susceptibles d'être fixés l'un à l'autre par une unité de fermeture (16),
- **en ce qu'**il peut être prévu notamment qu'un ensemble de canaux d'évacuation (17) soit conçu dans le cadre adaptateur (14b).

12. Dispositif de ventilation selon l'une quelconque des revendications 1 à 11,
**caractérisé**
**en ce que** sur le cadre de couplage (14) pour l'orifice d'entrée (8) du boîtier (4) respectif est fixé chaque fois un ensemble de passage (18), de préférence un ensemble de stores (18a), destiné à commander le débit volumétrique d'air à travers le module de ventilation (2) respectif, à la transversale du sens d'écoulement (10) .

13. Dispositif de ventilation selon l'une quelconque des revendications précédentes,
**caractérisé**
- **en ce que** le ventilateur (5) respectif est commandé par un dispositif de commande (27) qui comporte au moins un ensemble de mesure destiné à détecter le débit volumétrique d'air à travers l'au moins un élément filtrant (3), et
- **en ce que** l'au moins un ensemble de mesure comporte une unité de mesure de la pression, destinée à détecter une pression statique, qui est placée à l'intérieur du dispositif de ventilation (1).

14. Dispositif de ventilation selon la revendication 13,
**caractérisé**
- **en ce que** l'unité de mesure de la pression respective est fluidiquement reliée avec un point de mesure de la pression ou comporte un tel point de mesure de la pression, le point de mesure de la pression étant placé à l'intérieur de l'au moins un boîtier (4) dans la région de l'orifice d'entrée (8) et y comportant un orifice de mesure, et/ou
- **en ce que** le point de mesure de la pression respectif ou son orifice de mesure est placé dans une région d'égouttement (4b) de l'au moins un boîtier (4).

15. Dispositif de ventilation selon la revendication 14,
**caractérisé**
- **en ce que** le boîtier (4) comporte un cadre de boîtier (25) bordant l'orifice d'entrée (8), qui forme un échelon d'entrée débordant vers l'intérieur, et
- **en ce que** le point de mesure de la pression est placé sur l'échelon d'entrée, l'orifice de mesure étant ouvert dans le sens d'écoulement (10) et étant orienté sensiblement à la parallèle du sens d'écoulement (10).
